# FASCICULE DE BREVET EUROPEEN

(11) **EP 0 556 251 B1**
(45) Date de publication et mention de la délivrance du brevet: **21.12.1994**
(21) Numéro de dépôt: 91919647.7
(22) Date de dépôt: 25.10.1991
(51) Int. Cl.: H05B 6/12

(54) **TABLE DE CUISSON A CHAUFFAGE PAR INDUCTION**
KOCHFELD MIT INDUKTIONSBEHEIZUNG
INDUCTION-HEATED COOKING SURFACE

(30) Priorité: 09.11.1990 FR 9013937
(43) Date de publication de la demande: 25.08.1993
(73) Titulaire: COMPAGNIE EUROPEENNE POUR L'EQUIPEMENT MENAGER "CEPEM", F-45140 St Jean-de-la-Ruelle (FR)
(72) Inventeur: BONNET, Jacques, THOMSON-CSF, F-92402 Courbevoie Cédex (FR)
(74) Mandataire: Ruellan-Lemonnier, Brigitte
(86) Numéro de dépôt international: FR9100844
(87) Numéro de publication internationale: WO9209182

(56) Documents cités:
- DE-A- 2 242 823
- DE-A- 3 039 220
- FR-A- 2 206 644
- FR-A- 2 315 819
- FR-A- 2 373 939
- FR-A- 2 623 691
- US-A- 3 294 946

## Description

La présente invention concerne un perfectionnement aux tables de cuisson à chauffage par induction.

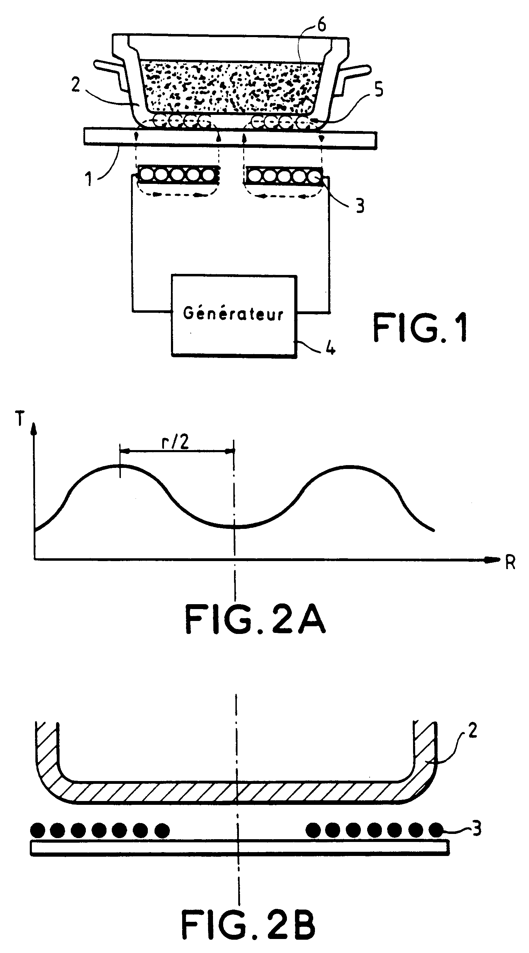

Comme représenté schématiquement sur la figure 1, une table de cuisson à chauffage par induction comprend généralement un plan de travail 1 constitué le plus souvent par une plaque en matériau céramique, notamment en vitrocéramique, sur laquelle sont en général marqués les emplacements des foyers de chauffe où doivent être posés des ustensiles de cuisson en matériau magnétisable tels que la casserole 2. En dessous de ce plan de travail 1 sont montés, en alignement axial avec les foyers de chauffe, des inducteurs 3 alimentés en courant électrique à haute fréquence par un générateur de courant 4. L'inducteur 3 est en général constitué par des bobines plates de fils électriques maintenues par un support non représenté. L'inducteur présente le plus souvent une forme en spirale.

En fonctionnement, l'inducteur 3 parcouru par le courant haute fréquence issu du générateur 4 génère dans la casserole 2 des courants induits 5 qui, par effet Joule, provoquent une élèvation de la température du contenu 6 de la casserole. Lorsque l'on utilise des inducteurs en spirale, on s'est aperçu que la chaleur développée dans le récipient de cuisson 2 n'était pas répartie uniformément. En effet, lorsque l'on mesure la température T en différents endroits de la surface du récipient en regard de l'inducteur, on observe un maximum de température au voisinage du demi rayon r/2 de l'inducteur comme représenté par la courbe T = f(R) donnée sur la figure 2. Cet effet bien connu dans le domaine de l'induction est appelé "effet couronne". Cet effet entraîne donc une limitation de la surface de chauffe. Or cette limitation se ressent notamment lorsque l'on utilise des récipients de cuisson présentant un diamètre très supérieur à celui de l'inducteur et qui, de plus, ont une faible inertie thermique et/ou sont fabriqués dans un matériau peu conducteur thermiquement. De tels problèmes se rencontrent particulièrement avec les tables de grande cuisson ou tables de cuisson de type professionnel. En effet, dans ce cas, les récipients utilisés peuvent présenter des diamètres de l'ordre de 400 mm alors que les inducteurs habituellement utilisés ont un diamètre d'environ 300 mm.

Pour remédier à cet inconvénient, on a proposé, notamment dans le brevet français FR-A-2 315 819, une table de cuisson à chauffage par induction dont l'inducteur est mobile parallèlement au plan de travail à l'aide d'un système mécanique de manière à égaliser la production de chaleur dans l'ustensile.

La présente invention a pour but de proposer un perfectionnement à cette solution.

La présente invention a aussi pour but de proposer une solution qui permette d'améliorer le rendement des tables de cuisson de type professionnel bien qu'elle ne soit pas limitée à ce seul type d' utilisation.

En conséquence, la présente invention a pour objet une table de cuisson à chauffage par induction comportant au moins un inducteur monté sous un plan de travail dans lequel il définit un foyer de chauffe et un générateur de courant haute fréquence alimentant l'inducteur, au moins un inducteur étant fixé sous le foyer de chauffe du plan de travail par l'intermédiaire de moyens permettant son déplacement sous ledit plan parallèlement à celui-ci, caractérisé en ce qu'elle comporte de plus des moyens interdisant tout mouvement de rotation de l'inducteur sur lui-même.

En effet, l'inducteur étant alimenté par des courants haute fréquence, il est préférable que son déplacement sous le plan de travail soit constitué par une transiation de l'inducteur dont le centre géométrique décrit une courbe, de préférence un cercle, concentrique à la zone de chauffe réservée aux récipients. Pour interdire tout mouvement de rotation de l'inducteur sur lui-même, on utilise, selon un mode de réalisation préférentiel, un parallélogramme déformable fixé entre l'inducteur et le bâti de la table.

Ainsi, dans le cadre de la présente invention, on communique à l'inducteur par rapport au récipient, un mouvement qui déplace, sous toute la surface du récipient, les zones de chauffage préférentielles.

Selon un mode de réalisation préférentiel, les moyens permettant le déplacement de l'inducteur sont constitués par un excentrique fixé entre le centre de l'inducteur et le cetre du foyer de chauffe et un moteur d'entraînement de l'excentrique.

Pour permettre une adaptation à des récipients présentant des surfaces différentes, de préférence l'excentrique comporte des moyens permettant de faire varier la longueur entre le centre de l'inducteur et le centre du foyer de chauffe.

Selon une autre caractéristique de la présente invention permettant d'éviter les problèmes résultant du mouvement de l'inducteur par rapport au générateur de courant haute fréquence, l'inducteur et au moins une partie du générateur de courant sont déplacés ensemble sous le plan de travail.

Selon une caractéristique supplémentaire de la présente invention, plusieurs inducteurs peuvent être couplés lors du déplacement, ce qui permet d'adapter la surface de révolution à la surface du récipient à chauffer.

D'autres caractéristiques et avantages de la présente invention apparaîtront à la lecture de la description d'un mode de réalisation préférentiel faite ci-après avec référence aux dessins ci-annexés dans lesquels :
- la figure 1 déjà décrite est une vue schématique d'une table de cuisson à chauffage par induction selon l'art connu ;
- les figures 2A et 2B déjà décrites représentent schématiquement une courbe donnant la température développée dans le récipient en fonction du rayon de l'inducteur, et une vue en coupe très schématique dudit récipient sur l'inducteur ;
- la figure 3 est une vue en plan schématique représentant le montage d'un inducteur conformément à la présente invention ;
- la figure 4 est une vue en élévation latérale du montage représenté à la figure 3, et
- les figures 5A et 5B sont respectivement une vue en élévation latérale et une vue en plan du montage de deux inducteurs couplés conformément à la présente invention.

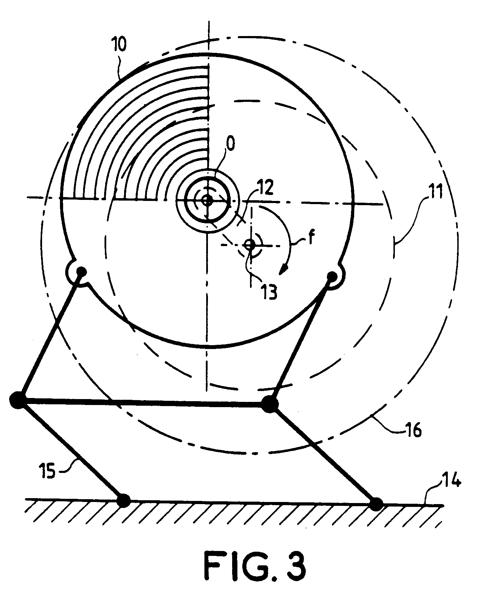

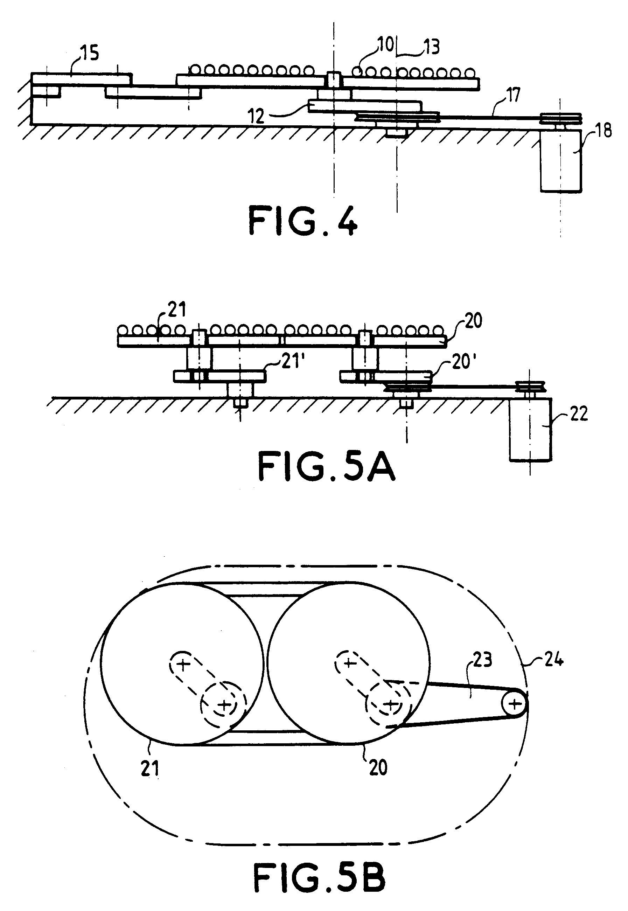

Sur les figures 3 et 4, on a représenté schématiquement un mode de montage préférentiel d'un inducteur 10 conformément à la présente invention. Dans ce cas, le centre O de l'inducteur 10 n'est plus monté directement sous le centre du foyer de chauffe symbolisé par le cercle 11 en tiretés mais est monté à une extrémité d'un bras 12 dont l'autre extrémité 13 est fixée au centre du foyer de chauffe 11. Le bras 12 est entraîné en rotation selon la flèche f par l'intermédiaire d'un système de renvoi et de poulies 17 et d'un moteur 18, comme représenté sur la figure 4. De ce fait, il entraîne l'inducteur 10 en rotation selon le cercle 16, comme représenté sur la figure 3. Le cercle 16 donne la limite de la zone balayée par l'inducteur 10 lorsqu'il est entraîné en rotation par l'intermédiaire d'un excentrique représenté schématiquement par le bras 12 dans le mode de réalisation de la figure 3. Il est évident pour l'homme de l'art que le bras 12 peut être remplacé par d'autres moyens connus de l'homme de l'art.

D'autre part, comme représenté sur les figures 3 et 4, l'inducteur 10 est fixé sur le bâti de la table de cuisson 14 par l'intermédiaire d'un parallélogramme déformable 15. Ce parallélogramme 15 permet un déplacement de l'inducteur en translation selon la surface 16, mais interdit tout mouvement de rotation de l'inducteur sur lui-même. En effet, l'inducteur étant alimenté par un générateur de courant haute fréquence, si l'inducteur peut tourner sur lui-même, il est nécessaire d'utiliser des connexions particulières du type contact tournant entre l'inducteur et le générateur de courant. De telles connexions spécifiques entraînent un surcoût au niveau de la table de cuisson. Pour remédier à cet inconvénient une autre solution consiste à déplacer simultanément l'inducteur et au moins une partie du générateur de courant haute fréquence qui lui est associée. Dans ce cas, le générateur est connecté à une partie basse fréquence et les connexions mobiles sont des connexions à fréquence secteur donc moins sensibles quant à la longueur, la souplesse et la résistance aux déformations.

D'autre part, pour que les limites de la zone balayée par l'inducteur puissent s'adapter à la surface du récipient en contact avec l'inducteur, le bras 12 peut être constitué par un bras de longueur réglable.

Selon un autre mode de réalisation de la présente invention représenté sur les figures 5A et 5B, pour permettre un balayage d'une surface plus importante, plusieurs inducteurs 20 et 21 peuvent être couplés ensemble et déplacés simultanément.

En particulier, on peut utiliser deux inducteurs solidarisés selon les figures 5A et 5B. Dans ce cas, les deux inducteurs sont entraînés par un seul moteur 22 relié à l'axe du bras 20′ fixé au centre du foyer de chauffe par l'intermédiaire d'un système d'entraînement connu 23. Ils décrivent une surface ellipsoïdale 24. Les systèmes d'entraînement 20′, 21′ de chaque inducteur 20, 21 sont identiques à celui décrit avec référence aux figures 3 et 4.

Ainsi, un inducteur mobile permet de déplacer sous toute la surface du récipient à chauffer les zones de chauffage préférentielles, ce qui diminue notablement l'effet couronne en donnant une meilleure répartition des zones de chauffage sous tout le récipient.

## Revendications

1. Table de cuisson à chauffage par induction comportant au moins un inducteur (10, 20, 21) monté sous un plan de travail dans lequel il définit un foyer de chauffe et un générateur de courant haute fréquence alimentant l'inducteur, au moins un inducteur (10, 20, 21) étant fixé sous le foyer de chauffe du plan de travail par l'intermédiaire de moyens (12, 20′ et 21′, 17, 18, 22) permettant son déplacement sous ledit plan parallèlement à celui-ci, caractérisée en ce qu'elle comporte de plus des moyens (15) interdisant tout mouvement de rotation de l'inducteur sur lui-même.

2. Table de cuisson selon la revendication 1, caractérisée en ce que les moyens permettant le déplacement de l'inducteur sont constitués par un excentrique (12, 20′ et 21′) fixé entre le centre de l'inducteur et le centre du foyer de chauffe et un moteur (17, 18, 22) d'entraînement de l'excentrique.

3. Table de cuisson selon la revendication 2, caractérisée en ce que l'excentrique comporte des nioyens permettant de faire varier la longueur entre le centre de l'inducteur et le centre du foyer de chauffe.

4. Table de cuisson selon la revendication 1, caractérisée en ce que les moyens interdisant tout mouvement de rotation de l'inducteur sur lui-même sont constitués par un parallélogramme déformable fixé entre l'inducteur et le bâti de la table.

5. Table de cuisson selon l'une quelconque des revendications 1 à 4, caractérisée en ce que l'inducteur et au moins une partie du générateur de courant haute fréquence sont déplacés sous le plan de travail.

6. Table de cuisson selon l'une quelconque des revendications 1 à 5, caractérisée en ce que plusieurs inducteurs (20, 21) sont couplés lors du déplacement.

## Patentansprüche

1. Herdplatte mit Induktionsheizung mittels mindestens eines Induktors (10, 20, 21), der unter einer Arbeitsebene montiert ist, in der er ein Kochfeld definiert, wobei ein Hochfrequenzstromgenerator den Induktor speist und mindestens ein Induktor (10, 20, 21) unter dem Kochfeld der Arbeitsebene über Mittel (12, 20′ und 21′, 17, 18, 22) befestigt ist, die seine Verschiebung unter der Arbeitsebene parallel zu dieser erlaubt, dadurch gekennzeichnet, daß die Herdplatte außerdem Mittel (15) aufweist, die jede Drehbewegung des Induktors um seine Achse untersagen.

2. Herdplatte nach Anspruch 1, dadurch gekennzeichnet, daß die Mittel zur Verschiebung des Induktors aus einem Exzentermechanismus (12, 20′ und 21′) bestehen, der zwischen dem Zentrum des Induktors und dem Zentrum des Kochfelds befestigt ist und von einem Motor (17, 18, 22) angetrieben wird.

3. Herdplatte nach Anspruch 1, dadurch gekennzeichnet, daß der exzentrische Mechanismus Mittel aufweist, um die Länge zwischen dem Zentrum des Induktors und dem Zentrum des Kochfelds zu variieren.

4. Herdplatte nach Anspruch 1, dadurch gekennzeichnet, daß die Mittel, die jede Drehbewegung des Induktors um seine Achse verbieten, aus einem verformbaren Parallelogramm bestehen, das zwischen dem Induktor und dem Chassis der Herdplatte befestigt ist.

5. Herdplatte nach einem beliebigen der Ansprüche 1 bis 4, dadurch gekennzeichnet, daß der Induktor und mindestens ein Teil des Hochfrequenzgenerators unter der Arbeitsebene gemeinsam verschoben werden.

6. Herdplatte nach einem beliebigen der Ansprüche 1 bis 5, dadurch gekennzeichnet, daß mehrere Induktoren (20, 21) bei der Verschiebung gekoppelt werden.

## Claims

1. Induction-heating hob, including at least one inductor (10, 20, 21) mounted under a work plane in which it defines a hot zone, and a high-frequency current generator supplying the inductor, at least one inductor (10, 20, 21) being fixed under the hot zone of the work plane using means (12, 20′ and 21′, 17, 18, 22) allowing it to be moved beneath and parallel to the said plane, characterized in that it furthermore includes means (15) preventing any rotational movement of the inductor on itself.

2. Hob according to Claim 1, characterized in that the means allowing movement of the inductor consists of an eccentric (12, 20′ and 21′) fixed between the centre of the inductor and the centre of the hot zone, and a motor (17, 18, 22) for driving the eccentric.

3. Hob according to Claim 2, characterized in that the eccentric includes means making it possible to vary the length between the centre of the inductor and the centre of the hot zone.

4. Hob according to Claim 1, characterized in that the means preventing any rotational movement of the inductor on itself consists of a deformable parallelogram fixed between the inductor and the frame of the surface.

5. Hob according to any of Claims 1 to 4, characterized in that the inductor and at least a part of the high-frequency current generator are moved beneath the work plane.

6. Hob according to any one of Claims 1 to 5, characterized in that several inductors (20, 21) are coupled during the movement.
